# FASCICULE DE BREVET EUROPEEN

(11) **EP 1 857 312 B1**
(45) Date de publication et mention de la délivrance du brevet: **28.03.2012**
(21) Numéro de dépôt: 07015952.0
(22) Date de dépôt: 09.02.2001
(51) Int. Cl.: B60J 7/14

(54) **Toit escamotable dans le coffre arrière d`un vèhicle, ce toit comportant une lunette arrière pivotante**
Im Kofferraum eines Fahrzeugs versenkbares Klappdach, das eine schwenkbare Heckscheibe umfasst
Roof that can retract into the rear boot of a vehicle, said roof comprising a pivoting rear window

(30) Priorité: 21.02.2000 FR 0002130; 20.03.2000 FR 0003542
(43) Date de publication de la demande: 21.11.2007
(62) Demande divisionnaire de: 01907755.1
(73) Titulaire: Société Européenne de Brevets Automobiles, 75011 Paris (FR)
(72) Inventeur: Queveau, Gérard, 79140 Le Pin (FR); Queveau, Paul, 79140 Montravers (FR); Guillez, Jean-Marc, 79140 Cirières (FR)
(74) Mandataire: Novagraaf Technologies

(56) Documents cités:
- EP-A- 0 678 411
- EP-A- 0 956 990
- DE-A1- 1 505 494
- GB-A- 2 194 759
- GB-A- 2 334 490

## Description

La présente invention concerne un toit escamotable dans le coffre arrière d'un véhicule.

Un tel toit escamotable permet de transformer un véhicule automobile du type coupé en un véhicule du type cabriolet.

On connaît notamment par des brevets au nom de la demanderesse, des toits escamotables dans le coffre arrière d'un véhicule.

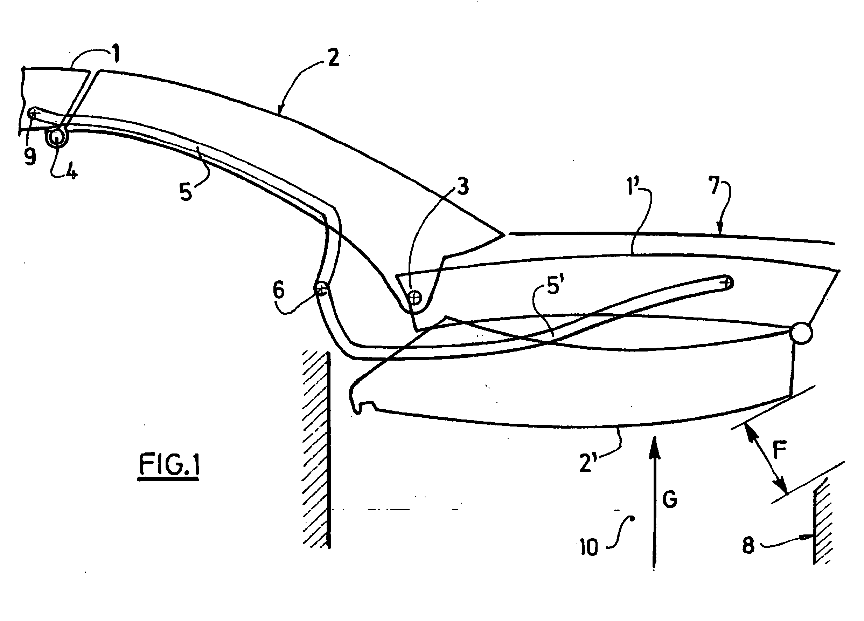

La figure 1 annexée illustre un toit escamotable du type ci-dessus.

Ce toit escamotable comprend un élément avant rigide 1 relié de façon articulée en 4 à un élément arrière rigide 2 dont l'extrémité arrière est articulée en 3 au châssis du véhicule. Ces deux éléments 1,2 sont mobiles entre une position dans laquelle ces deux éléments 1,2 recouvrent l'habitacle du véhicule et une position dans laquelle ces éléments (voir 1'et 2') sont repliés à l'intérieur du coffre arrière 10 dans une position sensiblement parallèle au couvercle 7 du coffre.

Le déplacement entre les deux positions ci-dessus, des éléments 1,2 est commandé au moyen d'un bras 5 articulé au châssis en 6 et à l'élément avant en 9. Le pivotement du bras 5 est commandé par exemple par un moteur relié à l'axe 3. Les articulations 4,9,6,3 forment un parallélogramme déformable.

L'élément arrière 2 porte une lunette arrière qui est habituellement fixée dans le prolongement de la surface extérieure de l'élément arrière.

La figure 1 montre que dans la position de rangement des éléments 1,2, il subsiste à l'intérieur du coffre 10, une distance réduite F entre le seuil arrière 8 de chargement du coffre et le bord inférieur de l'élément 2'et une hauteur réduite G entre ce dernier et le fond du coffre.

Par ailleurs, le document GB2194759 illustre un toit escamotable ayant les caractéristiques du préambule de la revendication 1. Cependant à l'état rangé les panneaux latéraux sont pris en sandwich entre le panneau avant et le panneau arrière ce qui augmente l'épaisseur du toit rangé et diminue en conséquence la hauteur disponible dans le coffre. Ce document ne permet donc pas d'augmenter le volume disponible dans le coffre.

Le but de la présente invention est d'augmenter les distances et hauteur ci-dessus afin de faciliter l'accès des bagages et d'augmenter le volume disponible à l'intérieur du coffre lorsque les éléments du toit sont rangés à l'intérieur de ce dernier.

Cet objet est réalisé avec un toit escamotable revendiqué dans la revendication 1.

Grâce à cette disposition, on augmente la distance entre le seuil de chargement et l'élément arrière, ainsi que la distance entre celui-ci et le fond du coffre.

Selon l'une des versions de l'invention, le bord arrière de l'élément avant est articulé au bord avant de la partie centrale arrière par une articulation située le plus près possible du volume extérieur du toit.

Selon une autre version, le bord arrière de l'élément avant porte à chacune de ses extrémités un axe relié à la partie avant de chaque élément latéral arrière.

Selon une autre version, lorsque les quatre éléments du toit sont repliés à l'intérieur du coffre, les deux éléments latéraux arrières s'étendent sous l'élément avant sensiblement parallèlement au fond du coffre et l'élément central arrière s'étend au-dessus du bord inférieur des deux éléments latéraux arrière.

On augmente ainsi notablement la facilité d'accès au coffre arrière ainsi que le volume de chargement de celui-ci.

D'autres particularités et avantages de l'invention apparaîtront encore dans la description ci-après.

Aux dessins annexés donnés à titre d'exemples non limitatifs :
- la figure 2 est une vue en coupe schématique longitudinale d'un toit escamotable conforme à l'invention ;
- la figure 3 est une vue en coupe suivant A de la figure 2 ;
- la figure 4 est une vue en coupe suivant B de la figure 2 ;
- la figure 5 est une vue en coupe suivant C de la figure 2 ;
- la figure 6 est une vue en coupe suivant D de la figure 2 ;
- la figure 7 est une vue en coupe longitudinale schématique, montrant les éléments du toit escamotable rangés dans le coffre, selon une version avantageuse de l'invention.

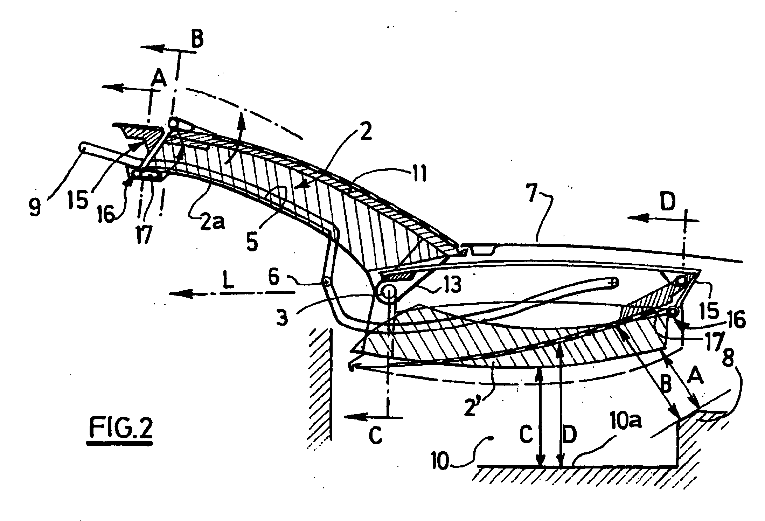

Dans la réalisation de la figure 2, le toit escamotable comporte un élément central arrière 11 qui est articulé dans sa partie avant au toit avant 1 par un axe 15 situé le plus proche possible du volume extérieur du toit.

Comme le montre la figure 2, chaque élément latéral arrière 2 est relié à l'élément central 11 par des moyens tels que lors du déplacement de cet élément 11 vers le coffre 10 les deux éléments latéraux arrière 2 puissent se dégager de la surface intérieure de l'élément avant 1 comme montré par la position 2' de ces éléments latéraux 2.

Comme le montre également la figure 2 les deux éléments latéraux 2 et l'élément central arrière 11 sont articulés au châssis suivant le même axe horizontal 3 perpendiculaire à l'axe longitudinal L du véhicule.

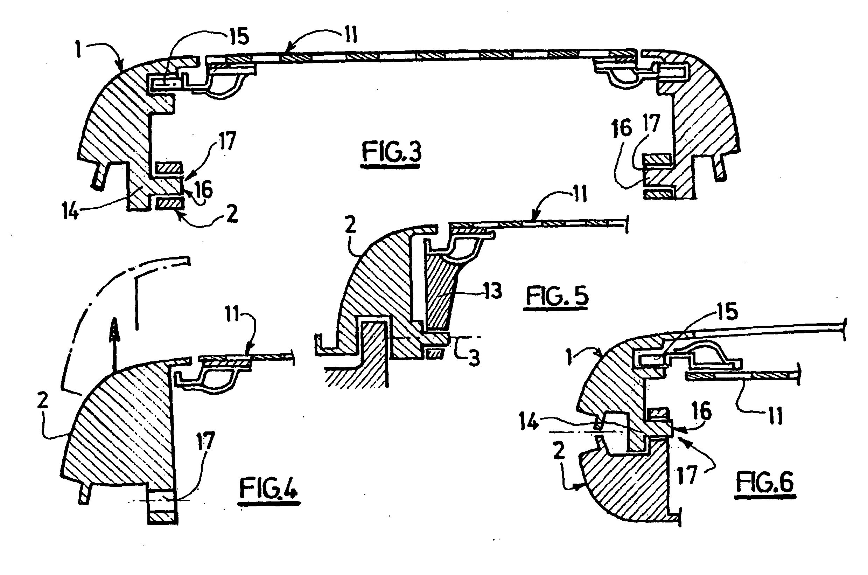

Dans l'exemple de la figure 2, le bord arrière de la lunette arrière 11 porte à chacune de ses extrémités une patte fixe 13 dont l'extrémité est montée pivotante sur l'axe horizontal 3 (voir également la figure 5).

Comme montré par les figures 3 et 4, le bord arrière de l'élément avant 1 porte à chacune de ses extrémités une extension 14 dont t'extrémité opposée à l'articulation 15 de l'élément central porte un doigt 16 qui est engagé dans une lumière 17 de l'élément latéral arrière 2. Cette lumière 17 est allongée sensiblement dans la direction du bord inférieur 2a de l'élément latéral 2.

La poussée du doigt 16 dans la lumière 17 lors du pivotement du toit avant 1 autour de l'axe 15 de l'élément central arrière 11 permet le pivotement de l'élément latéral arrière 2 autour de l'axe 3 et donc son dégagement par rapport à l'élément central 11.

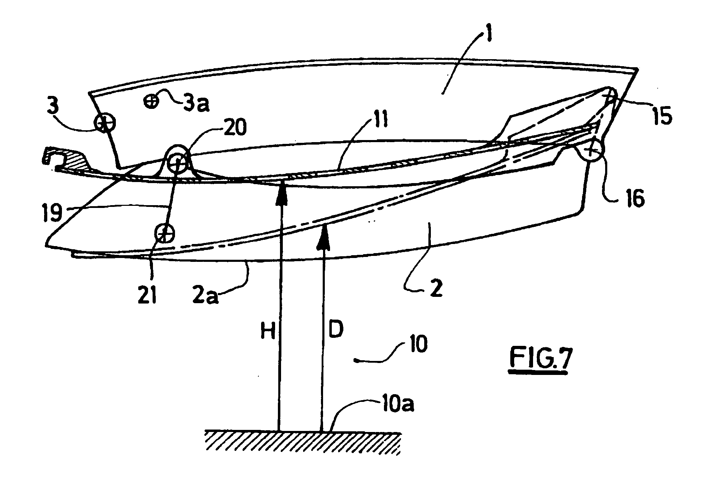

Dans le cas de la version représentée sur la figure 7, on a optimisé davantage la hauteur disponible D au-dessus du fond 10a du coffre, pour obtenir une hauteur H. Dans cette version, on a modifié la position de l'articulation 3 pour la déplacer en 3a et on a solidarisé l'élément central 11 et les éléments latéraux 2 par une biellette 19.

Dans cet exemple, l'articulation commune entre les éléments latéraux 2 et l'élément central 11 est remplacée par un axe 20 solidaire de l'élément central 11 sur lequel s'articule la biellette 19 articulée à son autre extrémité sur l'élément arrière latéral 2 en 21.

Le mouvement de rotation de l'élément central 11 en 3a et du toit avant 1 entraîne le déplacement des éléments latéraux 2 sensiblement parallèlement à eux-mêmes relativement à l'élément central 11.

On va maintenant expliquer en référence à la figure 2, le fonctionnement de la première version du toit escamotable selon l'invention.

Le pivotement du bras 5 vers l'arrière, autour de l'axe 6, fait tourner la partie centrale arrière 11 autour de l'axe 3, autour duquel tournent également les éléments latéraux 2.

Lors du pivotement de l'élément central arrière 11 vers le coffre arrière 10, l'avant des éléments latéraux 2 se dégage progressivement à l'extérieur de l'élément central 11, ce mouvement étant provoqué par la poussée du doigt 16 du toit 1 dans la lumière 17 des éléments latéraux 2.

Ainsi lorsque les deux éléments de toit 1 et 11 sont situés dans le coffre 10, l'avant de l'élément central 11 est situé à une distance B du seuil 8 de chargement du coffre, plus importante que la distance A qui sépare l'avant des éléments latéraux 2 au seuil 8.

Cette position optimisée de l'élément central 11 est due à la position de l'axe 15 très proche du volume extérieur de toit.

Cette position de l'élément central 11 fait également passer de C à D la hauteur de chargement du coffre.

Dans le cas de la version illustrée par la figure 7, grâce au doigt 16 du toit avant 1 et à la biellette 19 qui relie de façon articulée les deux éléments latéraux 2 à l'élément central 11, l'augmentation de la hauteur de chargement du coffre est encore augmentée puisque celle-ci passe de D à H.

Bien entendu, l'invention n'est pas limitée aux exemples de réalisations que l'on vient de décrire et on peut apporter à ceux-ci des modifications pour autant que celles-ci ne sortent pas de l'étendu de protection définie par les revendications.

## Revendications

1. Toit escamotable dans le coffre arrière (10) d'un véhicule, comportant un élément avant rigide (1) relié de façon articulé à un élément central arrière rigide (11) suivant un premier axe (15) situé le plus près possible du volume extérieur du toit, l'extrémité arrière dudit élément central arrière (11) étant reliée au châssis du véhicule suivant un deuxième axe horizontal (3a) perpendiculaire à l'axe longitudinal (L) du véhicule, ces deux éléments (1) et (11) étant mobiles entre une position dans laquelle ces deux éléments recouvrent l'habitacle du véhicule et une position dans laquelle ces deux éléments (1) et (11) sont repliés l'un sur l'autre à l'intérieur du coffre arrière (10) dans une position sensiblement parallèle au couvercle (7) dudit coffre, la partie arrière du toit comprenant en plus de l'élément central arrière (11) deux éléments latéraux (2), ledit toit étant **caractérisé en ce que** lesdits éléments latéraux (2) sont reliés à l'élément central (11) par des moyens tels que lors du déplacement de l'élément central (11) vers le coffre arrière (10), les éléments latéraux (2) puissent se dégager de la surface extérieure de l'élément central (11), ledit toit comprenant une biellette (19) articulée d'une part, à une première extrémité sur un axe (20) solidaire de l'élément central arrière (11) et d'autre part, à une seconde extrémité sur l'élément latéral arrière (2), le mouvement de rotation de l'élément central (11) autour du deuxième axe (3a) et de l'élément avant (1) autour du premier axe (15) entraînant le déplacement des éléments latéraux (2) sensiblement parallèlement à eux même relativement à l'élément central (11).

## Claims

1. Roof retractable in the rear boot (10) of a vehicle, comprising a rigid forward element (1) connected in an articulated manner to a rigid central rear element (11) along a first axis (15) located as close as possible to the external volume of the roof, the rear extremity of said central rear element (11) being connected to the vehicle chassis along a second horizontal axis (3a) perpendicular to the longitudinal axis (L) of the vehicle, these two elements (1 and 11) being mobile between one position in which both elements cover the interior of the vehicle and a position in which these two elements (1 and 11) are folded on top of one another within the rear boot (10) in a position essentially parallel to the cover (7) of said bonnet, the rear part of the roof comprising in addition to the central rear element (11) two lateral elements (2), said roof being **characterised in that** said lateral elements (2) are connected to the central element (11) by means such that during the movement of the central element (11) towards the rear boot (10), the lateral elements (2) may disengage from the external surface of the central element (11), said roof comprising a small connecting rod (19) articulated on the one hand to a first extremity on an axis (20) locked to the central rear element (11) and on the other hand, to a second extremity on the lateral rear element (2), the rotational movement of the central element (11) around the second axis (3a) and of the forward element (1) around the first axis (15) leading to the movement of the lateral elements (2) essentially parallel to them relative to the central element (11).

## Patentansprüche

1. In den heckseitigen Kofferraum (10) eines Fahrzeugs versenkbares Dach, mit einem steifen vorderen Element (1), das gelenkig mit einem steifen zentralen hinteren Element (11) entlang einer ersten Achse (15) verbunden ist, die so nahe wie möglich am Außenvolumen des Dachs liegt, wobei das hintere Ende des hinteren Zentralelements (11) mit dem Chassis des Fahrzeugs entlang einer horizontalen zweiten Achse (3a) senkrecht zur Längsachse (L) des Fahrzeugs verbunden ist, wobei diese beiden Elemente (1) und (11) zwischen einer Position, in welcher diese zwei Elemente die Fahrgastzelle des Fahrzeugs abdecken, und einer Position beweglich sind, in welcher diese beiden Elemente (1) und (11) übereinander in das Innere des heckseitigen Kofferraums (10) in einer im Wesentlichen zum Deckel (7) des Kofferraums parallelen Position zurückgefaltet sind, wobei der hintere Bereich des Dachs zusätzlich zu dem hinteren Zentralelement (11) zwei Seitenelemente (2) umfasst, wobei das Dach **dadurch gekennzeichnet ist, dass** die Seitenelemente (2) mit dem Zentralelement (11) derart verbunden sind, dass sich beim Verschieben des Zentralelements (11) in Richtung des heckseitigen Kofferraums (10) die Seitenelemente (2) von der Außenfläche des Zentralelements (11) lösen können, wobei das Dach einen Stift (19) umfasst, der einerseits gelenkig verbunden ist mit einem ersten Ende mit einer Achse (20), die mit dem hinteren Zentralelement (11) einstückig ist, und andererseits mit einem zweiten Ende mit dem hinteren Seitenelement (2), wobei die Drehbewegung des Zentralelements (11) um die zweite Achse (3a) und des vorderen Elements (1) um die erste Achse (15) die Verschiebung der Seitenelemente (2) im Wesentlichen parallel zueinander relativ zum Zentralelement (11) mit sich bringt.
